# EUROPEAN PATENT APPLICATION

(11) **EP 3 958 551 A1**
(43) Date of publication of application: **23.02.2022**
(21) Application number: 20791604.0
(22) Date of filing: 24.03.2020
(51) Int. Cl.: H04N 5/225, H04M 1/02

(54) **MOBILE TERMINAL AND SHELL ASSEMBLY THEREOF**

(30) Priority: 19.04.2019 CN 201920547557 U
(71) Applicant: GUANGDONG OPPO MOBILE TELECOMMUNICATIONS CORP., LTD., Wusha, Chang'an Dongguan Guangdong 523860 (CN)
(72) Inventor: WU, Yongqiang, Dongguan, Guangdong 523860 (CN)
(74) Representative: Manitz Finsterwald Patent- und Rechtsanwaltspartnerschaft mbB
(86) International application number: PCT/CN2020/080808
(87) International publication number: WO 2020/211600

(57) **Abstract**

A mobile terminal and a shell assembly thereof. The shell assembly (100a) comprises a housing (10), a metal sheet (13) and a camera cover sheet (12); the housing (10) comprises an outer surface (10b) and an inner surface (10a) facing away from one another, a mounting hole (11) is provided on the housing (10), and the mounting hole (11) penetrates through the outer surface (10b) and the inner surface (10a); the metal sheet (13) is provided with a first through hole (13a) in communication with the mounting hole (11), and the metal sheet (13) is connected to the inner surface (10a); and the camera cover sheet (12) is mounted at the mounting hole (11) and connected to the metal sheet (13); light at one side of the outer surface (10b) can be incident to one side of the inner surface (10a) through the camera cover sheet (12); and when the shell assembly (100a) is assembled to the mobile terminal (100), the camera cover sheet (12) is opposite to a camera assembly (30), so that the light can be incident to the camera assembly (30) through the camera cover sheet (12).

## Description

### TECHNICAL FIELD

The present disclosure relates to the field of mobile terminal technologies, and in particular to a mobile terminal and a shell assembly thereof.

### BACKGROUND

As consumers have higher and higher needs for the camera function of mobile terminals such as mobile phones, the use of three-camera, four-camera or even more cameras has become the mainstream of future mobile terminal development. The current structural design of camera cover sheets generally has a problem of too large size, affecting the layout of multiple cameras.

### SUMMARY OF THE DISCLOSURE

Based on that, it is necessary to provide a shell assembly and a mobile terminal.

In an aspect, the present disclosure provides a shell assembly for a mobile terminal arranged with a camera assembly, including:
a shell, including an inner surface and an outer surface disposed opposite to each other and defining a mounting hole; wherein the mounting hole penetrates the outer surface and the inner surface;
a metal sheet, defining a first through hole; wherein the first through hole communicates with the mounting hole, and the metal sheet is connected to the inner surface; and
a camera cover sheet, disposed at the mounting hole and connected to the metal sheet; wherein light at a side with the outer surface is capable of passing through the camera cover sheet and reaching a side with the inner surface;
wherein when the shell assembly is assembled in the mobile terminal, the camera cover sheet and the camera assembly are arranged facing each other, such that the light is capable of passing through the camera cover sheet and entering the camera assembly.

In another aspect, the present disclosure provides a mobile terminal, including:
a camera assembly, and
a shell assembly, including:
a shell, including an inner surface and an outer surface disposed opposite to each other and defining a mounting hole; wherein the mounting hole penetrates the outer surface and the inner surface;
a metal sheet, defining a first through hole; wherein the first through hole communicates with the mounting hole, and the metal sheet is connected to the inner surface; and
a camera cover sheet, disposed at the mounting hole and connected to the metal sheet; wherein light at a side with the outer surface is capable of passing through the camera cover sheet and reaching a side with the inner surface;
wherein when the shell assembly is assembled in the mobile terminal, the camera cover sheet and the camera assembly are arranged facing each other, such that the light is capable of passing through the camera cover sheet and entering the camera assembly.

In further another aspect, the present disclosure provides a shell assembly for a mobile terminal arranged with a camera assembly, including:
a shell, defining a mounting hole; wherein the mounting hole penetrates the shell;
a metal sheet, connected to the shell and defining a first through hole; wherein the first through hole communicated with the mounting hole; and
a camera cover sheet, disposed at the mounting hole;
wherein when the shell assembly is assembled in the mobile terminal, the camera cover sheet and the camera assembly are arranged facing each other, such that light is capable of passing through the camera cover sheet and entering the camera assembly.

In further another aspect, the present disclosure provides a mobile terminal including a camera assembly and the above shell assembly.

### BRIEF DESCRIPTION OF THE DRAWINGS

In order to more clearly describe the technical solutions in the embodiments of the present disclosure, the following will briefly introduce the drawings required in the description of the embodiments. Obviously, the drawings in the following description are only some embodiments of the present disclosure. For those skilled in the art, other drawings can be obtained based on these drawings without creative work.
FIG. 1 is a perspective view of a mobile terminal according to an embodiment of the present disclosure.
FIG. 2 is an exploded schematic view of a shell assembly and a camera assembly of a mobile terminal according to an embodiment of the present disclosure.
FIG. 3 is a structural schematic view of a camera assembly and a metal sheet in a mobile terminal according to another embodiment of the present disclosure.
FIG. 4 is a schematic cross-sectional view of a shell assembly and a camera assembly of a mobile terminal according to an embodiment of the present disclosure in an assembled state.

### DETAILED DESCRIPTION

To facilitate the understanding of the present disclosure, the following will make a more comprehensive description of the present disclosure with reference to the relevant drawings. The drawings show preferred embodiments of the present disclosure. However, the present disclosure can be implemented in many different forms and is not limited to the embodiments described herein. On the contrary, the purpose of providing these embodiments is to make the understanding of the disclosure of the present disclosure more thorough and comprehensive.

Terms "terminal device" herein may refer to, but be not limited to, devices that can receive and/or send communication signals connected via any one or several of the following connection methods.
(1) Connection via wired lines, such as public switched telephone network (PSTN), digital subscriber line (DSL), digital cable, direct cable;
(2) Connection via wireless interface, such as cellular network, wireless local area network (WLAN), digital TV network such as DVB-H network, satellite network, AM-FM broadcast transmitter.

A terminal device configured to communicate through a wireless interface may be referred to as a "mobile terminal". Examples of the mobile terminals include but are not limited to the following electronic devices.
(1) Satellite phone or cellular phone;
(2) Personal communication system (PCS) terminal that can combine cellular radio phones with data processing, fax and data communication capabilities;
(3) Radio phone, pager, Internet/Intranet access, Web browser, notebook, calendar, personal digital assistant (PDA) equipped with global positioning system (GPS) receivers;
(4) Conventional laptop and/or palmtop receiver;
(5) Conventional laptop and/or palmtop radio telephone transceivers, etc.

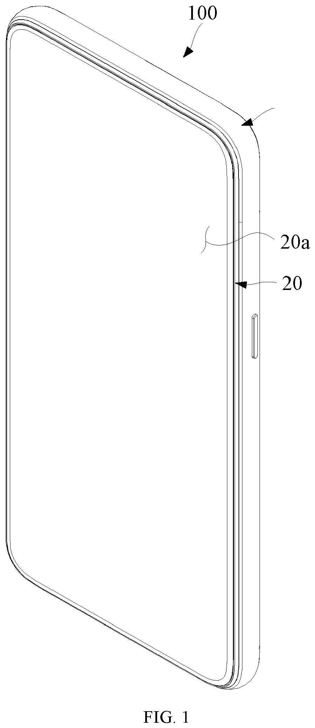

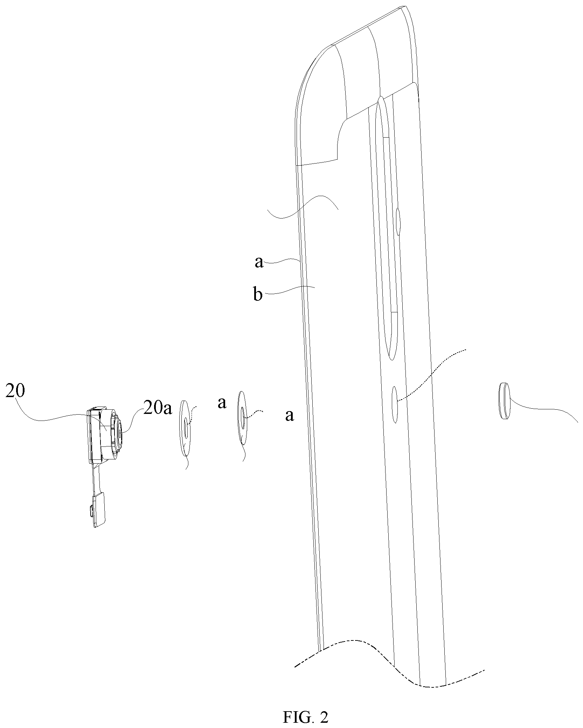

Referring to FIGS. 1 and 2, in some embodiments, a mobile terminal 100 is provided. The mobile terminal 100 may be a smart phone, a computer, or an iPad, etc., which is not limited herein.

The mobile terminal 100 is described by taking a mobile phone as an example. The mobile terminal 100 includes a shell assembly 100a, a display screen 20, and a camera assembly 30. The shell assembly 100a is connected to the display screen 20, and the camera assembly 30 is disposed in the mobile terminal 100.

As shown in FIG. 2, the shell assembly 100a includes a shell 10, a camera cover sheet 12 and a metal sheet 13.

The shell 10 may include an inner surface 10a and an outer surface 10b disposed opposite to each other. It should be noted that the outer surface 10b refers to a surface of the shell 10 facing away from the mobile terminal 100 when the shell assembly 100a is assembled in the mobile terminal 100.

The shell 10 may be either a front shell or a rear shell. For example, when the shell 10 is a front shell, the outer surface 10b of the shell 10 is exposed on a side where a display area of the display screen 20 is located. For another example, when the shell 10 is a rear shell, the outer surface 10b of the shell 10 is a surface on a side facing away from the display screen 20.

The shell 10 may define a mounting hole 11 penetrating the outer surface 10b and the inner surface 10a. The metal sheet 13 may define a first through hole 13a communicating with the mounting hole 11. The metal sheet 13 is connected to the inner surface 10a of the shell 10.

The camera cover sheet 12 is installed at the mounting hole 11 and connected to the metal sheet 13. Since the mounting hole 11 communicates with the first through hole 13a, light passing through the camera cover sheet 12 can pass through the first through hole 13a. Light at a side with the outer surface 10b can enter a side at which the inner surface 10a is located through the camera cover sheet 12. The use of the camera cover sheet 12 can meet the needs of passing light through the shell 10 and thus meet the shooting needs of the camera assembly 30. Specifically, when the shell assembly 100a is assembled in the mobile terminal 100, the camera cover sheet 12 and the camera assembly 30 are arranged facing each other, such that light can pass through the camera cover sheet 12 and enter the camera assembly 30.

In the embodiments, since the camera cover sheet 12 is disposed on the shell 10 through the metal sheet 13 and does not need to be connected to the camera assembly 30, the camera cover sheet 12 is prevented from being affected by the shape and structure of the camera assembly 30 and having a large size. In this way of connecting the camera cover sheet 12 to the shell 10 through the metal sheet 13, the camera cover sheet 12 only needs to meet the optical needs of the camera assembly 30. Since the camera cover sheet 12 is not restricted by the shape and structure of the camera assembly 30, the camera cover sheet 12 can be made as small as possible to facilitate the layout of multiple camera assemblies 30.

In some embodiments, the display screen 20 may be adopted with a liquid crystal display (LCD) screen for displaying information, and the LCD screen may be a thin film transistor (TFT) screen or an in-plane switching (IPS) screen or a splice liquid crystal display (SLCD) screen.

In other embodiments, the display screen 20 may be adopted with an organic light-emitting diode (OLED) screen for displaying information, and the OLED screen may be an Active matrix organic light-emitting diode (AMOLED) screen or a super active matrix organic light emitting diode (Super AMOLED) screen or a Super AMOLED Plus screen, which is not limited herein.

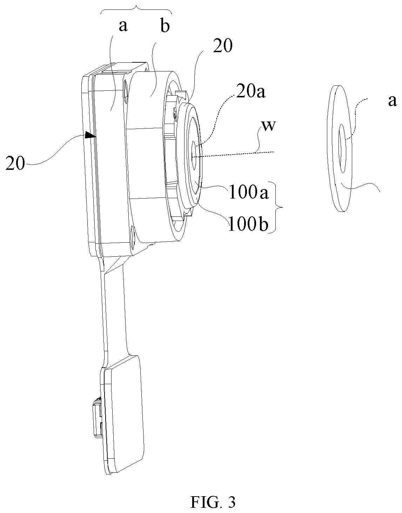

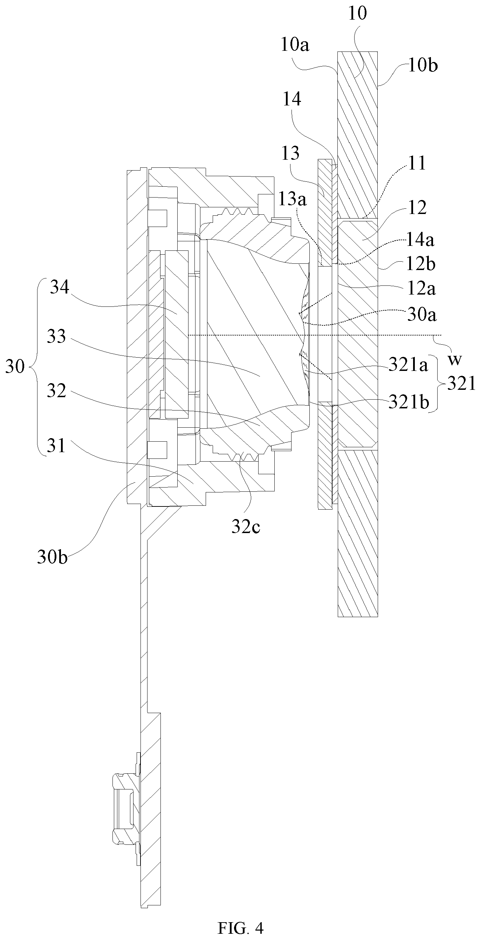

Further referring to FIGS. 3 and 4, the camera assembly 30 may include a base body 31, a lens base 32, a lens 33 and a photosensitive element 34.

The base body 31 has a hollow structure, the photosensitive element 34 and other devices are located in the base body 31, and the lens 33 is disposed in the lens base 32 and faces the photosensitive element 34. The lens base 32 has an end surface 321. The end surface 321 defines a light entrance hole 30a. The light entrance hole 30a can meet the needs of external light entering the lens 33. Specifically, the light can pass through the light entrance hole 30a and enter the photosensitive element 34 through the lens 33.

In some embodiments, the lens base 32 is arranged with a thread 32c to connect to the base body 31 through the thread 32c, such that the lens 33 is arranged facing the photosensitive element 34. Specifically, the light is incident on the photosensitive element 34 after being optically processed by the lens 33, such that the photosensitive element 34 is exposed to light to meet the imaging needs. When the lens base 32 is screwed, the lens 33 on the lens base 32 can be adjusted such that the light processed by the lens 33 enters the photosensitive element 34 for obtaining better imaging effects.

It should be noted out that the camera assembly 30 includes a plurality of lenses 33 arranged in the lens base 32 in an optical axis direction w to perform optical processing on the light incident from the light entrance hole 30a.

In the embodiments, the first through hole 13a communicates with the light entrance hole 30a, and the diameter of the first through hole 13a is greater than the diameter of the light entrance hole 30a, such that enough light enters the light entrance hole 30a from the first through hole 13a, thereby meeting the imaging needs of the camera assembly 30. An orthographic projection area of the metal sheet 13 on a reference plane partially overlaps an orthographic projection area of the end surface 321 on the reference plane, and the reference plane is a geometric plane perpendicular to the optical axis w of the lens 33.

Since the orthographic projection area of the metal sheet 13 on the reference plane is partially overlapped with the orthographic projection area of the end face 321 on the reference plane, the first through hole 13a can provide enough light to enter the lens 33 through the light entrance hole 30a, and an inner wall of the metal sheet 13 defining the first through hole 13a can be as close as possible to the optical axis w of the lens 33. That is, the size of the first through hole 13a can be made as small as possible. Moreover, the metal sheet 13 is able to adapt to the attachment needs of the smaller camera cover sheet 12, and in turn the camera cover sheet 12 only needs to adapt to the optical needs of the camera assembly 30. Therefore, the camera cover sheet 12 can be made as small as possible.

It should be noted that the end surface 321 may include multiple surfaces. For example, in some embodiments, the end surface 321 includes a first ring surface 321a and a second ring surface 321b. The first ring surface 321a is disposed within the second ring surface 321b and is joined with an inner edge of the second ring surface 321b. The light entrance hole 30a penetrates the first ring surface 321a along the optical axis w direction of the lens 33.

Further, the metal sheet 13 is superimposed on the second ring surface 321b, that is, projections of the metal sheet 13 and the second ring surface 321b on the reference plane have overlapping parts, such that this arrangement enables the size of the first through hole 13a to be small enough to meet the needs of light incident. By virtue of the miniaturization of the size of the first through hole 13a enables, when the camera cover sheet 12 is connected to the metal sheet 13, it is only necessary for the camera cover sheet 12 to consider the optical needs of the camera assembly 30 imaging, and the camera cover sheet 12 is not necessarily limited by the shape and structure of the camera assembly 30, thus the size of the camera cover sheet 12 can be made as small as possible. When multiple camera assemblies 30 are arranged, the miniaturization design of the camera cover sheet 12 is beneficial to the layout of the multiple camera assemblies 30.

In some embodiments, the orthographic projection area of the metal sheet 13 on the reference plane partially overlaps the orthographic projection area of the first ring surface 321a on the reference plane. Since the light entrance hole 30a is opened on the first ring surface 321a, when the metal sheet 13 defines the first through hole 13a, it is only necessary to consider that light incident from the first through hole 13a through the light entrance hole 30a to the lens 33 shall satisfy the camera assembly 30 imaging needs. The orthographic projection area of the metal sheet 13 is partially overlapped with the orthographic projection area of the first ring surface 321a on the reference plane, and with this configuration, the miniaturization of the first through hole 13a enables the metal sheet 13 to meet the installation and fixation needs of the smaller camera cover sheet 12. Even if the camera cover sheet 12 is configured to be small in size, the metal sheet 13 can still connect and fix the camera cover sheet 12 to the shell 10.

In some embodiments, the photosensitive element 34 may be connected to a FPC board 30b, the base 31 is bonded to the FPC board 30b by glue, and the photosensitive element 34 is received inside. The lens base 32 is connected to the base 31, and the lens 33 on the lens base 32 is arranged facing the photosensitive element 34 to optically process the external light, thereafter the light enters the photosensitive element 34.

In some embodiments, part of the structure of the metal sheet 13 is in contact with the end surface 321. Since the metal sheet 13 is in the shape of a sheet, the metal sheet 13 being in contact with the end surface 321 may indicate that the metal sheet 13 is stacked on the end surface 321, such that the size of the first through hole 13a on the metal sheet 13 can be made as small as possible, and the first through hole 13a only needs to meet the light incident needs. Accordingly, the camera cover sheet 12 connected to the metal sheet 13, while meeting the light incident needs of the camera assembly 30, can also be made as small as possible to realize the miniaturization design of the camera cover sheet 12.

It should be noted that, for the lens 33, the part that performs the optical function is circular in shape. During the optical design process, light entering the lens 33 and exerting the imaging function presents a cone shape with the optical axis w as an axis. Correspondingly, the end surface 321 is a surface of revolution with the optical axis w as an axis. Therefore, the orthographic projection of a contact position between the metal sheet 13 and the end surface 321 on the reference plane is circular. With this configuration, regarding that the metal sheet 13 is a sheet structure, the metal sheet 13 and the optical axis w are perpendicular to the direction of the optical axis w. Therefore, the first through hole 13a may be designed as a circular through hole that just meets the light propagation needs, and the size of the first through hole 13a has been minimized. Of course, in other embodiments, the first through hole 13a can be opened as a square through hole or a heterogeneous through hole that is larger than the smallest circular through hole, only enough external light is required to be able to enter the lens 33 through the first through-hole 13a and meet the shooting needs of the camera assembly 30.

Referring to FIG. 2 and FIG. 4, the metal sheet 13 and the shell 10 are bonded together by a double-sided tape 14. The double-sided tape 14 defines a second through hole 14a communicating with the first through hole 13a, and the camera cover sheet 12 is connected to the double-sided tape 14 and covers the second through hole 14a.

Further, the first through hole 13a and the second through hole 14a are circular holes, and the first through hole 13a and the second through hole 14a are arranged coaxially with a center line of the mounting hole 11 as an axis to make full use of light that enters the camera assembly 30 through the first through hole 13a and the second through holes 14a. This coaxial arrangement can enable the first through holes 13a and the second through holes 14a to be arranged as small as possible while meeting the shooting needs of the camera assembly 30. Correspondingly, the camera cover sheet 12 installed in the mounting hole 11 can also be arranged as small as possible while meeting the shooting needs of the camera assembly 30.

In some embodiments, the camera cover sheet 12 includes a first surface 12a and a second surface 12b disposed opposite to each other. The first surface 12a is flush with the inner surface 10a, and the second surface 12b is flush with the outer surface 10b. Therefore, after the metal sheet 13 is connected to the camera cover sheet 12 and the metal sheet 13 is connected to the inner surface 10a of the shell 10, the metal sheet 13 can provide stable support for the camera cover sheet 12. The second surface 12b and the outer surface 10b are flush with each other to make the overall appearance of the shell assembly 100a well-shaped, preventing the camera cover sheet 12 from protruding from the outer surface 10b and being easily worn.

The technical features of the above embodiments can be combined arbitrarily. In order to make the description concise, all possible combinations of the various technical features in the above embodiments are not described. However, as long as there is no contradiction in the combination of these technical features, the all possible combinations should be considered as the scope of the present disclosure.

The above embodiments only explain several implementation manners of the present application, and the description is relatively specific and detailed, but it should not be understood as a limitation to the scope of the present disclosure. It should be noted that for those skilled in the art, without departing from the concept of the present disclosure, several modifications and improvements can be made, and these all fall within the scope of the present disclosure. Therefore, the scope of the present disclosure shall be subject to the appended claims.

## Claims

1. A shell assembly for a mobile terminal arranged with a camera assembly, comprising:
a shell, comprising an inner surface and an outer surface opposite to the inner surface, the shell defining a mounting hole; wherein the mounting hole penetrates the outer surface and the inner surface;
a metal sheet, defining a first through hole; wherein the first through hole communicates with the mounting hole, and the metal sheet is connected to the inner surface; and
a camera cover sheet, disposed at the mounting hole and connected to the metal sheet; wherein light at a side with the outer surface is capable of passing through the camera cover sheet and reaching a side with the inner surface;
wherein when the shell assembly is assembled in the mobile terminal, the camera cover sheet and the camera assembly are arranged facing each other, such that the light is capable of passing through the camera cover sheet and entering the camera assembly.

2. The shell assembly according to claim 1, wherein the metal sheet and the shell are bonded together by a double-sided tape; the double-sided tape defines a second through hole communicating with the first through hole; the camera cover sheet is connected to the double-sided tape and arranged covering the second through hole.

3. The shell assembly according to claim 2, wherein the first through hole and the second through hole are circular holes, and the first through hole and the second through hole are arranged coaxially with a center line of the mounting hole as an axis.

4. The shell assembly according to claim 1, wherein the camera cover sheet comprises a first surface and a second surface disposed opposite to each other; the first surface is flush with the inner surface, and the second surface is flush with the outer surface.

5. A mobile terminal, comprising:
a camera assembly, and
a shell assembly, comprising:
a shell, comprising an inner surface and an outer surface disposed opposite to the inner surface, the shell defining a mounting hole; wherein the mounting hole penetrates the outer surface and the inner surface;
a metal sheet, defining a first through hole; wherein the first through hole communicates with the mounting hole, and the metal sheet is connected to the inner surface; and
a camera cover sheet, disposed at the mounting hole and connected to the metal sheet; wherein light at a side with the outer surface is capable of passing through the camera cover sheet and reaching a side with the inner surface;
wherein when the shell assembly is assembled in the mobile terminal, the camera cover sheet and the camera assembly are arranged facing each other, such that the light is capable of passing through the camera cover sheet and entering the camera assembly.

6. The mobile terminal according to claim 5, wherein the camera assembly comprises a lens base, a lens, and a photosensitive element; the lens base comprises an end surface defining a light entrance hole; the lens is disposed in the lens base and faces the photosensitive element; the light is capable of passing through the light entrance hole and entering the photosensitive element through the lens; the first through hole communicates with the light entrance hole, and a diameter of the first through hole is greater than a diameter of the light entrance hole; an orthographic projection area of the metal sheet on a reference plane is partially overlapped with an orthographic projection area of the end surface on the reference plane, the reference plane being a geometric plane perpendicular to an optical axis of the lens.

7. The mobile terminal according to claim 6, wherein the end surface comprises a first ring surface and a second ring surface; the first ring surface is joined with an inner edge of the second ring surface; the light entrance hole penetrates the first ring surface along a direction of the optical axis of the lens; the metal sheet is superimposed on the second ring surface.

8. The mobile terminal according to claim 6, wherein the end surface comprises a first ring surface and a second ring surface; the first ring surface is joined with an inner edge of the second ring surface; the light entrance hole penetrates the first ring surface along a direction of the optical axis of the lens; the orthographic projection area of the metal sheet on the reference plane is partially overlapped with an orthographic projection area of the first ring surface on the reference plane.

9. The mobile terminal according to claim 6, wherein a partial structure of the metal sheet is in contact with the end surface; an orthographic projection of a contact position between the metal sheet and the end surface on the reference plane is substantially circular in shape.

10. The mobile terminal according to claim 7 or 8, wherein the metal sheet and the shell are bonded together by a double-sided tape; the double-sided tape defines a second through hole communicating with the first through hole; the camera cover sheet is connected to the double-sided tape and arranged covering the second through hole.

11. The mobile terminal according to claim 10, wherein the first through hole and the second through hole are circular holes, and the first through hole and the second through hole are arranged coaxially with a center line of the mounting hole as an axis.

12. A shell assembly for a mobile terminal arranged with a camera assembly, comprising:
a shell, defining a mounting hole; wherein the mounting hole penetrates the shell;
a metal sheet, connected to the shell and defining a first through hole; wherein the first through hole communicated with the mounting hole; and
a camera cover sheet, disposed at the mounting hole;
wherein when the shell assembly is assembled in the mobile terminal, the camera cover sheet and the camera assembly are arranged facing each other, such that light is capable of passing through the camera cover sheet and entering the camera assembly.

13. The shell assembly according to claim 12, wherein the metal sheet and the shell are bonded together by a double-sided tape; the double-sided tape defines a second through hole communicating with the first through hole; the camera cover sheet is connected to the double-sided tape and arranged covering the second through hole.

14. The shell assembly according to claim 13, wherein the first through hole and the second through hole are circular holes, and the first through hole and the second through hole are arranged coaxially with a center line of the mounting hole as an axis.

15. The shell assembly according to claim 12, wherein the camera cover sheet comprises a first surface and a second surface disposed opposite to each other; the first surface is flush with the inner surface, and the second surface is flush with the outer surface.

16. A mobile terminal, comprising a camera assembly and a shell assembly according to any one of claims 12-15.

17. The mobile terminal according to claim 16, wherein the camera assembly comprises a lens base, a lens, and a photosensitive element; the lens base comprises an end surface defining a light entrance hole; the lens is disposed in the lens base and faces the photosensitive element; the light is capable of passing through the light entrance hole and entering the photosensitive element through the lens; the first through hole communicates with the light entrance hole, and a diameter of the first through hole is greater than a diameter of the light entrance hole; an orthographic projection area of the metal sheet on a reference plane is partially overlapped with an orthographic projection area of the end surface on the reference plane, the reference plane being a geometric plane perpendicular to an optical axis of the lens.

18. The mobile terminal according to claim 17, wherein the end surface comprises a first ring surface and a second ring surface; the first ring surface is joined with an inner edge of the second ring surface; the light entrance hole penetrates the first ring surface along a direction of the optical axis of the lens; the metal sheet is superimposed on the second ring surface.

19. The mobile terminal according to claim 17, wherein the end surface comprises a first ring surface and a second ring surface; the first ring surface is joined with an inner edge of the second ring surface; the light entrance hole penetrates the first ring surface along a direction of the optical axis of the lens; the orthographic projection area of the metal sheet on the reference plane is partially overlapped with an orthographic projection area of the first ring surface on the reference plane.

20. The mobile terminal according to claim 17, wherein a partial structure of the metal sheet is in contact with the end surface; an orthographic projection of a contact position between the metal sheet and the end surface on the reference plane is substantially circular in shape.
